# EUROPEAN PATENT SPECIFICATION

(11) **EP 0 420 419 B1**
(45) Date of publication and mention of the grant of the patent: **17.07.1996**
(21) Application number: 90309547.9
(22) Date of filing: 31.08.1990
(51) Int. Cl.: G06F 17/30, G06F 17/60

(54) **Method and apparatus for on-line processing of transaction data**
Verfahren und Anordnung zur On-line-Verarbeitung von Transaktionsdaten
Procédé et dispositif de traitement en ligne de données transactionnelles

(30) Priority: 20.09.1989 JP 243619/89
(43) Date of publication of application: 03.04.1991
(73) Proprietor: HITACHI, LTD., Chiyoda-ku, Tokyo 101 (JP)
(72) Inventor: Wataya, Hiroshi, Narusawa Apt. 4714, Hitachi-shi, Ibaraki 316 (JP); Sueki, Masao, Hitachi-shi, Ibaraki 316 (JP); Adachi, Yoshiaki, Hitachi-shi, Ibaraki 316 (JP); Hayashi, Keijiro, Hitachi-shi, Ibaraki 316 (JP)
(74) Representative: Calderbank, Thomas Roger

(56) References cited:
- US-A- 4 752 910
- US-A- 4 819 159

## Description

The present invention relates to a method of on-line processing of transaction data and to a system for on-line processing of such data.

As is stated above, the present invention is concerned with on-line processing of transaction data. It should be appreciated immediately that transaction data are data used in transactions, and transaction processing is a specialized area. In such processing, a "transaction" is a single unit of work, which must be wholly completed or wholly aborted. Then, the unit of work of such a transaction involves the step supplying a request in the form of transaction data for the change of stored information, changing stored information, and confirming that the change has been made, with the transaction being aborted unless all the steps are performed correctly. Change of stored data includes addition of new data to the store. Furthermore, on-line transaction processing is normally concerned with the case where a very large number of transactions must be processed quickly.

One example of on-line transaction processing is in the operation of a banking system, in which each transaction represents a single specific change to the records of the bank. Thus, a request for withdrawal of a specified sum from an account is processed by transmitting, normally from a remote site, a request to the bank's main records to withdraw that sum from the specified account, the changing of the amount in that account by the specified sum, and the confirmation to the remote site that the appropriate sum can be withdrawn. If any of these steps are not carried out correctly, then the whole of the transaction must be void.

Thus, transaction processing exhibits what is known as "atomicity". Any change to the stored record must be on an all-or-nothing basis, so that if any transaction is void, the record must be restored to its original state. The system either performs all the changes to the record that the transaction specified, or it does none of them.

In practice, this means that, when each transaction is processed, it is necessary that various stages of the processing be recorded to ensure that it is possible to return the system to its original state if the transaction is void. Thus, the system normally includes a data register (also sometimes known as a data log) which records the incoming transaction data, and also records data output as part of the transaction. Furthermore there is normally a file register (or file log) which records the initial state of the record to be changed prior to it being changed, and records the appropriate state of the record after it has been changed. Then, if there is failure, it is normally possible to restore all the stored records to their original state on the basis of the current state of the store, and the file register's recording of the record prior to its change. This is known as "backward recovery". sometimes, this cannot be used in which case it may be necessary to use a backup record and the file register of the changed record. This is known as "forward recovery". In themselves, such techniques of transaction processing are known.

In existing transaction processing the transaction data are processed immediately they are received by a suitable processor. Thus, when transaction data is received, the appropriate stored information is changed, and suitable confirmation passed back to the site at which the transaction data originated. An example of such transaction processing is disclosed in the "Manual of TMS-4 V/SP Programming of HITAC Program Product VOS3", and in JP-A-62-145366.

Another example of transaction processing exhibiting atomicity is disclosed in US-A-4819159. In this document there is disclosed a distributed processing system capable of "fault-tolerant processing" in which an error in processing is recognised and corrected. The system includes a plurality of processor units, at least one of which is capable of recognizing the failure of another processing unit, examining the transaction data contained in the disk associated with the faulty processing unit, and establishing control of that disk.

In considering the standard methods of on-line transaction processing, it is important to realise that the volume of transactions received at the transaction processing site is extremely numerous. Furthermore, the transaction processing site will necessarily store a very large number of records, any one of which could be changed by a single transaction. In practice, this means that the records will be distributed over a number of storage media, and when a transaction is processed, it is first necessary to find the appropriate record within the transaction media. In order to read the appropriate records, some mechanical operations will be needed, and these are slow, compared with the processing itself. Therefore, the time taken to find the appropriate record within the storage media is relatively long, and thus this time becomes a major factor in the total time of processing the transaction. Since each transaction is then processed separately, a large proportion of the time of transaction processing is taken up in the step of identifying the transaction records to be changed by each of a series of transaction data.

In US-A-4752910 there is disclosed a transactional data processing apparatus which stacks processed data in a temporary storage file. The processed data is transferred to a permanent storage file when a predetermined condition is satisfied prior to the time at which the temporary storage file has become filled with processed data. The transferring circuitry operates on a time-shared basis with other ongoing operations of the processing apparatus. Because no manual saving of the processed data on to a disk is required, the speed of the processing is increased. The teachings of this document, however, are still subject to the disadvantages explained above, because the data are processed singly, rather than as a batch. It is only after processing that the data are stacked as a batch.

JP-A-63-94360 discloses a method of on-line processing of transaction data in which, when each transaction is received, a judgement is made as to whether the transaction should be batch processed, or not. If the transaction should not be batch processed, it undergoes normal processing. If it is to be batch processed, the transaction is stacked with other transactions. When the number of stacked transactions exceeds a predetermined number, or when a predetermined time has elapsed, the transactions in the stack are processed.

According to the present invention as defined in claim 1 there is provided a method of on-line processing of transaction data comprising the steps of
a) transmitting a multiplicity of transaction data from at least one transaction initiation site to a transaction processing site;
b) stacking a plurality of the transmitted transaction data at said transaction processing site until predetermined conditions for said stacking exist for said stacked transaction data, the predetermined conditions being such as to indicate when a prerequisite has been satisfied for deciding to terminate the stacking procedure;
c) transferring all said stacked transaction data to a processing means at said transaction processing site for processing when said predetermined conditions exist; and
d) processing said transferred transaction data by use of said processing means;
   wherein said multiplicity of transaction data includes a plurality of different types of transaction data, and said predetermined conditions relate to the arrival of transaction data of a specified one of said types at said transaction processing site,
   whereby step (c) occurs when said transaction data of said specified one of said types arrives at said transaction processing site such as to satisfy said predetermined conditions relating to that type of transaction data.

The present invention also relates to a system for transaction processing.

Thus, according to claim 5, a second aspect of the present invention provides an on-line processing system for transaction data, comprising:
at least one transaction initiation site for generating a multiplicity of transaction data;
a transaction processing site for processing said multiplicity of transaction data, the transaction processing site including processing means for processing said transaction data; and
transmission means for transmitting said transaction data from said transaction initiation site to said transaction processing site; wherein:
said transaction processing site further includes:
definition means defining predetermined conditions;
stacking means for stacking a plurality of the transmitted transaction data at said transaction processing site until said predetermined conditions exist for said stacked transaction data, the predetermined conditions being predetermined conditions for said stacking and being such as to indicate when a prerequisite has been satisfied for deciding to terminate the stacking procedure; and
transferring means for transferring all said stacked transaction data to said processing means for processing when said predetermined conditions exist;
wherein said multiplicity of transaction data includes a plurality of different types of transaction data, and said predetermined conditions relate to the arrival of transaction data of a specified one of said types at said transaction processing site; and
said transferring means is arranged to transfer said stacked data when said transaction data of said specified one of said types arrives at said transaction processing site such as to satisfy said predetermined conditions relating to that type of transaction data.

Thus, it can be appreciated that the present invention is achievable either on the basis of a suitably programmed general purpose computer, or by dedicated systems.

Embodiments of the present invention will now be described by way of example with reference to the accompanying drawings in which:
Fig. 1 is a general schematic diagram of a known on-line transaction processing system;
Fig. 2 shows a tree of interconnections of parts of an on-line transaction processing system which may incorporate the present invention;
Fig. 3 is a block-diagram of part of a transaction processing site which may operate according to the present invention;
Fig. 4 shows a general schematic diagram of an on-line transaction processing system incorporating the present invention;
Figs. 5 is a flow-chart illustrating the processing occurring within the system of Fig. 4;
Fig. 6 shows a data string which may be used in the transaction processing of the present invention;
Fig. 7 shows schematically the relationship between data strings used in the present invention; and
Fig. 8 shows memories and registers in an on-line processing system which may operate according to the present invention.

Before describing embodiments of the present invention, it is helpful to understand the known methods of transaction processing.

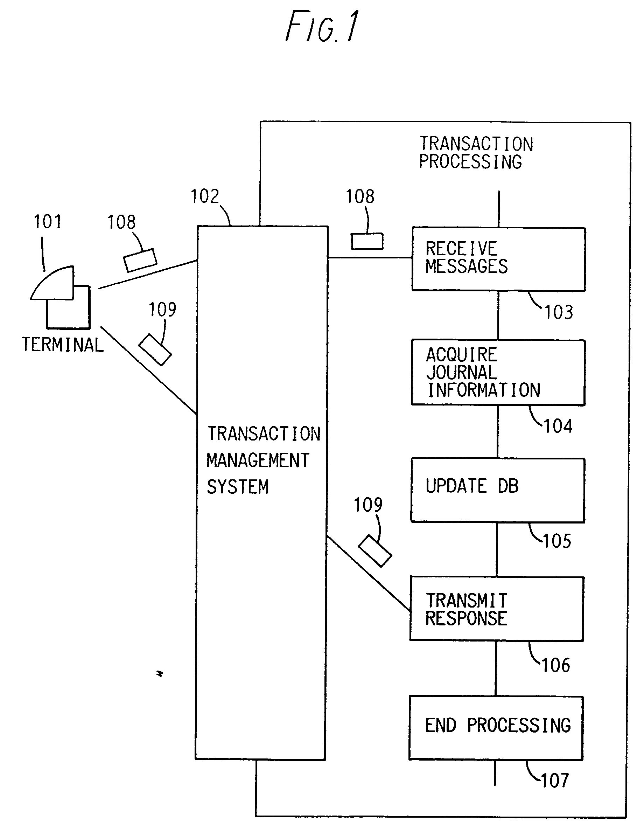

A summary of one known method will now be given with reference to Fig. 1. A terminal 101 requests transaction processing by generating transaction data. The terminal 101 transmits a request message 108 (i.e. transaction data) through communication lines to a transaction management system (which will be hereinafter referred to as a "TMS") 102. The TMS 102 having received the request message instantly starts transaction processing of the transaction data. In this transaction processing, the request message is first received (at 103) to process the following job. After the necessary journal information and the log information have been stored (at 104) in a disc unit, a data base (DB) is updated (at 105). After this, a response message (109) is transmitted (at 106), if necessary, and the transaction processing ends (at 107).

Thus, in the known method, one transaction process occurs each time a transaction data (request message) is inputted, so that the transactions are inputted and processed one by one.

In recent on-line systems (for e.g. financial business, securities business, seat reservations, stock control and lotteries) more complex systems and higher traffic densities for transaction processing are desired. Since, in the known transaction processing the transactions are processed one by one, the processing dynamic step number (i.e. the step number of programs to be executed) increases in proportion to the number of transactions, and the number of disc access operations for journal storage and for data base access in the processing of individual transaction are also proportional to the number of transactions so that a high throughput cannot be achieved.

In the transaction processing of the present invention, a plurality of transaction data are batched and transferred as a batch for transaction processing. In transaction processing in which a plurality of transaction data are batched and transferred, the processing time for each transaction can be reduced by executing the processings of the individual transactions in as batched a form as possible, to improve the throughput of the system as a whole.

In order to reduce the processing time of one transaction, the memory records or the like are batched and transmitted to reduce the number of dynamic steps of the processing of the transaction data so that the CPU processing time of one transaction can be reduced. The most effective way of improving the throughput is by use of a disc batch access in transaction processing. In the ordinary transaction processing, disc access is performed for acquiring journal/log information and to refer to and or update the data base. By batching these disc access operations for all the transferred transactions in a batch, the input/output (I/O) time per transaction can be drastically reduced. Since, in disc access involving a plurality of discs, the time to find the appropriate disc (the 'seek' time) is longer, by several times than the data transfer time or time to find the appropriate record on a pre-identified disc (the 'search time'), the I/O time can be reduced by having a single seek operation, by means of the present invention, as compared with the known methods in which a seek time is involved for each transaction data.

As a result, a high throughput can be achieved while satisfying the demand response for each transaction. A high throughput can also be achieved for the transaction having no strict response demand. In the system in which transactions having strict and loose response demands are mixed, a high throughput can also be achieved in the whole system while satisfying the strict response demand for the transactions of the strict response demand.

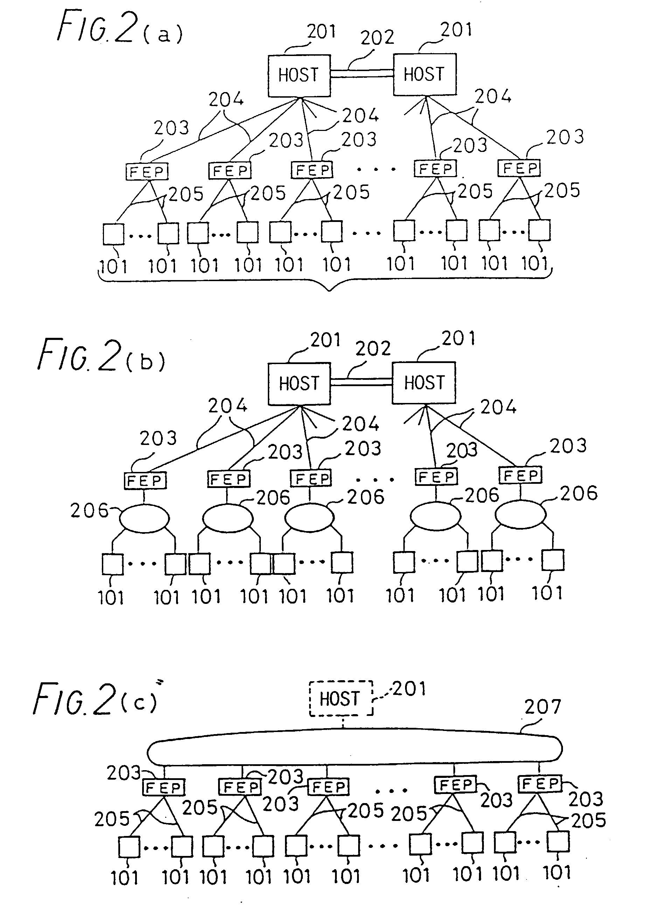

Fig. 2 shows an embodiment of the structure of an on-line system transaction processing system, to which the present invention is applied.

The system shown in Fig. 2(a) controls several thousands of terminal units 101 distributed over a wide geographical spread. At the highest rank of this system, two host computers 201 are connected to act primarily as data base servers through a direct channel 202 to constitute a hot standby system. At lower ranks, front end processors (FEP) 203 are distributed and arranged at points where their main function is to control the terminal units 101. Since the FEPs 203 and the host computer 201 transmit/receive vast amounts of data, lines 204 used to connect them are fast digital lines or ISDN. Each FEP 203 is connected to several tens of terminals 101 through cleared lines 205. The majority of transactions are executed between the FEPs 203 and the terminals 101, but vast data transmissions/ receptions by batch processing occur between the FEPs 203 and the host computer 201. The transaction management system according to the present embodiment may be located in the FEPs required for high traffic transaction processing and/or in the host computers 201.

The present invention can be applied not only to the system structure shown in Fig. 2(a) but also a system in which the terminal groups 101 below the FEPs 203 are connected through local area networks (LAN), as shown in Fig. 2(b), or a system in which the FEP groups 203 are connected to one another through a LAN 207, as shown in Fig. 2(c). Here, the LAN 207 of Fig. 2(c) need not be connected to the host 201. Moreover, the present invention can be used even when a demand for the transaction processing is received only from one terminal.

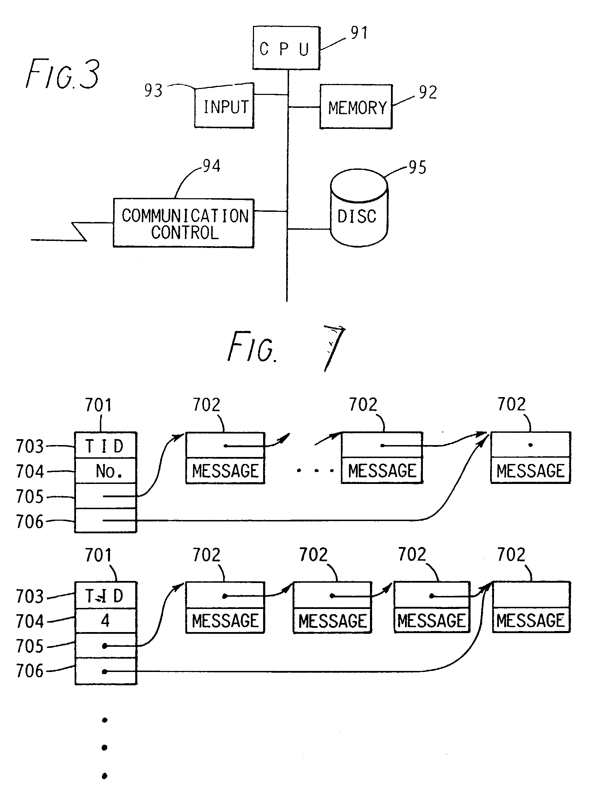

Fig. 3 shows the basic hardware structure of an FEP 203 to which the system of the present invention is applied. The FEP has a memory 92 such as a ROM or RAM for storing e.g. a program, various tables; an input unit 93 such as a keyboard; a communication control unit 94 for controlling the communications to the terminal units 101; a disc unit 95 containing a plurality of discs with records stored therein forming a data base; and a CPU 91 for controlling all the foregoing units. A stack area for stacking the transactions is formed in the memory 92.

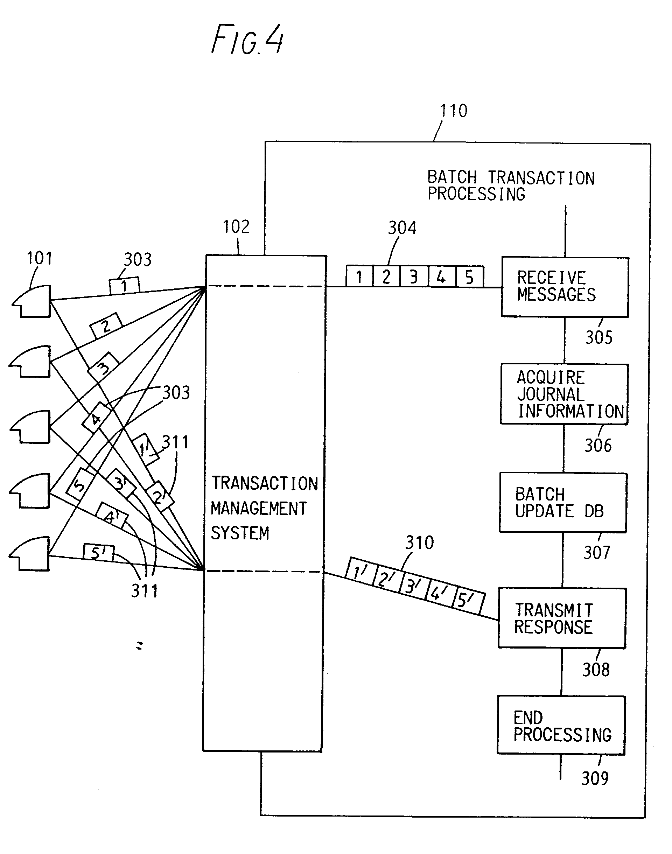

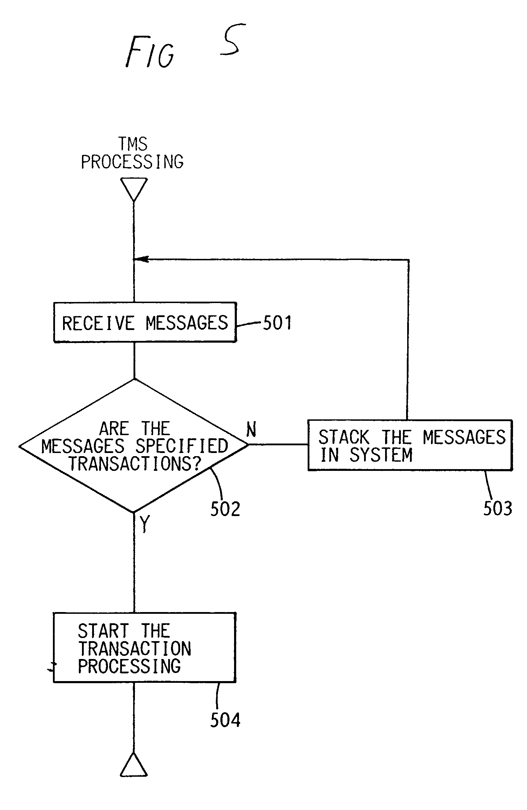

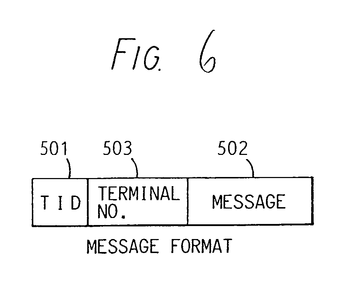

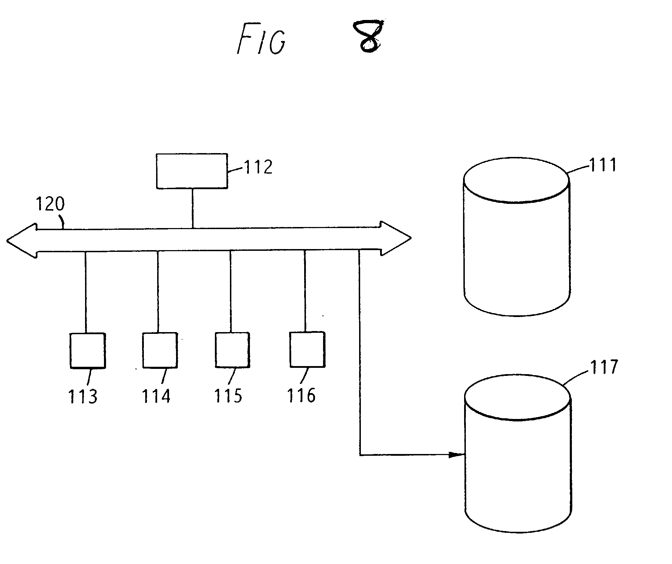

Fig. 4 schematically shows an on-line transaction processing system according to the present embodiment.

The present system has three main parts:
a transaction initiation site formed by each of the terminal units 101 for inputting transactions 303;
a transmission controller formed by TMS 102; and
a batch transaction processing unit 110 including the individual transaction processing programs prepared by application programmers.

The transaction messages 303 inputted from individual terminal units 101 are transferred as a batch to the transaction processing unit 110 when they are stacked to a specified number in the TMS 102 or when a specified time has elapsed after the first transaction stacked in a vacant stack area is received. In the transaction processing unit 110, batch messages 304 are received (at a reception unit 305), and the journal/log information of each transaction is stored as a batch (at logger 306). The corresponding data base is updated (by unit 307) to prepare a response message. This message is returned as a batch response message 310 to the TMS 102 (at 308). Then, the process is ended (at 309). In response to the batch response message 310, the TMS 102 returns a response message 311 to each terminal 101 and ends the transaction process for that batch. Of course, since this operation is transaction processing, it is necessary that checks are made to ensure that all operates correctly, as will be described later.

In the present invention, however, the timing of the start of the batch processing is on the basis of the input of a transaction data of a specified type. Fig. 5 is a schematic flow showing the case in which there is transfer of all the transactions stacked when transaction data of a specified type are input, the stack being transferred as a whole to the transaction processing.

First, input messages are received (at 501) from the terminal units 101, and a check is made (at step 502) to determine whether or not the messages are the predetermined specific transaction data. If NOT, the messages are stacked (at step 503) in the system. If YES, the transaction data stacked up to that time are transferred as a whole to the transaction processing, and this processing starts (at step 504).

An input transaction format at this time is shown in Fig. 6. In order to discriminate the type of each transaction data, the message 502 of each transaction data string is preceded by a transaction identification (TID) 501. When an input message is generated, each terminal unit 101 sets TID in accordance with the type of transaction. The TMS then uses the TID to carry out the decision step 502 of Fig. 5.

Fig. 7 shows the data structure of input messages which may be stacked. The example illustrates the case in which the messages are stacked for each type of transaction. Individual messages 702 are managed by a list structure for each type of transaction. A header 701 for each transaction has a TID 703, a message number 704, a start indicator 705 for indicating the first message and a final indicator 706 for indicating the final message. Moreover, each message is accompanied by an indicator indicating the next message. When the transaction processing starts, the messages are batched and transferred to the transaction processing by the start indicator 705 and the final indicator in the header 701. In the transaction processing, all the messages transferred can be referred by following the indicators 702 attached to the individual messages from the start of the start indicator 705. The final indicator 706 can be omitted if desired.

Since the present invention is concerned with transaction processing, it is necessary for appropriate checks to be made at each stage, to ensure that the appropriate changes are made correctly. As was mentioned earlier, transaction processing must display atomicity, with the transactions being processed on an all-or-nothing basis. For this reason, recordings are made of the state of various operations in the transaction processing. This is shown by Fig. 8 which illustrates part of the transaction processing unit 110. In Fig. 8, a data bus 120 connects to a main data base memory 111, and the movement of data on the bus 120 is controlled by a processor 112. Apart from the necessary records, transaction data could move on the bus 110, for processing, to the data base 111, and from that database 111 back to complete the transaction. However, in practice there are a series of registers 113, 114, 115, 116, and a back-up data base 117. In practice, the registers 113 to 116 may be virtual memory areas in a larger memory, but it is preferable, for safety, that the records 113 to 116 be separate from the data base 111. Furthermore, the back-up data base 117 represents a memory in which the main data base 111 can periodically be down-loaded (e.g. at the end of each day), so that even if there is a full system failure the next day, a large part of the transaction record can be restored.

The first register 113 is an input register for recording incoming transaction data. In a similar way, register 114 is a register for recording output data for the transaction. Each transaction normally involves the change of one specific record within the data base 111. Therefore, the register 115 records that record prior to change, whilst register 116 records that record after change. Thus, every step in the transaction processing is recorded, so that if there is a failure anywhere in the transaction processing, the data base 111 can be restored to its original state prior to the commencement of processing of that transaction. Such restoration is, in itself, known and will not be discussed in further detail.

However, it should be noted that, with the present invention, a multiplicity of such registers may be needed, to enable the system to operate in a batch manner. In practice, it is likely that if there is a failure in the system, it will affect all the transactions of a batch, so that either all the transactions are successfully processed, or none of them are. However, it is possible for one or more transactions of the batch to fail, whilst the other transactions succeed, and thus it is necessary to have a record then of the specific transaction data that failed. This could be achieved, for example, by storing in the input register 113, with suitable addresses, all the transaction data of a batch, to enable any specific transaction data to be recovered if necessary.

As was mentioned above, the system shown in Fig. 8 is controlled by a suitable processor 112. This processor must check that the transaction has been completed correctly, and if not it triggers the registers 113 to 116, and possibly the back-up data base 117 to restore the data base 111 to its original state. This may be by means of backward recovery or forward recovery as appropriate.

As was mentioned earlier, the present invention is applicable to the on-line processing of a range of transactions. It may, for example, be used in banking systems, in which case each transaction represents an instruction to make a specific change to the record of a specific account. The present invention may also be applied to a lottery system, in which case the transaction is the purchase of a specific lottery number by a specific person, so that the transaction data is a request to associate a specific person with a specific lottery number.

## Claims

1. A method of on-line processing of transaction data comprising the steps of:
a) transmitting a multiplicity of transaction data from at least one transaction initiation site (101) to a transaction processing site (110);
b) stacking a plurality of the transmitted transaction data at said transaction processing site (110) until predetermined conditions for said stacking exist for said stacked transaction data, the predetermined conditions being such as to indicate when a prerequisite has been satisfied for deciding to terminate the stacking procedure;
c) transferring all said stacked transaction data to a processing means (305 to 309) at said transaction processing site (110) for processing when said predetermined conditions exist; and
d) processing said transferred transaction data by use of said processing means (305 to 309);
characterised in that:
said multiplicity of transaction data includes a plurality of different types of transaction data, and said predetermined conditions relate to the arrival of transaction data of a specified one of said types at said transaction processing site,
and in that step (c) occurs when said transaction data of said specified one of said types arrives at said transaction processing site such as to satisfy said predetermined conditions relating to that type of transaction data.

2. A method of on-line processing of transaction data according to claim 1, wherein the processing of said transferred transaction data by said processing means (305 to 309) includes;
e) changing a plurality of stored information items stored in a store (95, 111) to changed information items in said store (95, 111) on the basis of each of said plurality of transaction data; and
f) confirming to said at least one initiation site (101) that said changed information items are stored in store (95, 111); and
g) checking that each of said steps (a) to (c),(e) and
(f) have been performed correctly and restoring said stored information items to their state prior to steps (a) to (c), (e) and (f) unless all of said steps (a) to (c), (e) and (f) have been correctly performed.

3. A method according to claim 2, wherein prior to step (e) each of said plurality of stored information items is stored in a first register (115) whereby each of said plurality of stored information items is returned from said register (115) to said store (111) at said step (g) unless all of said steps (a) to (c), (e) and (f) are correctly performed.

4. A method according to claim 2 or claim 3, wherein said step (e) includes storing each of said changed information items in a second register (116) in addition to said store (111), whereby each of said plurality of stored information items is restorable at said step (g) on the basis of said changed information items and said stacked transaction data.

5. An on-line processing system for transaction data, comprising:
at least one transaction initiation site (101) for generating a multiplicity of transaction data;
a transaction processing site (110) for processing said multiplicity of transaction data, the transaction processing site (110) including processing means (305 to 309) for processing said transaction data; and
transmission means for transmitting said transaction data from said transaction initiation site (101) to said transaction processing site (110); wherein:
said transaction processing site (110) further includes:
definition means (401 to 406, 501 to 504) defining predetermined conditions;
stacking means (102) for stacking a plurality of the transmitted transaction data at said transaction processing site (110) until said predetermined conditions exist for said stacked transaction data, the predetermined conditions being predetermined conditions for said stacking and being such as to indicate when a prerequisite has been satisfied for deciding to terminate the stacking procedure; and
transferring means (405, 504) for transferring all said stacked transaction data to said processing means (305 to 309) for processing when said predetermined conditions exist;
characterised in that:
said multiplicity of transaction data includes a plurality of different types of transaction data, and said predetermined conditions relate to the arrival of transaction data of a specified one of said types at said transaction processing site, and in that
said transferring means is arranged to transfer said stacked data when said transaction data of said specified one of said types arrives at said transaction processing site such as to satisfy said predetermined conditions relating to that type of transaction data.

6. An on-line processing system for transaction data according to claim 5, wherein the transaction processing means (305 to 309) further includes:
a store (95, 111) for storing information items;
changing means for changing a plurality of information items stored in a said store (95, 111) to changed information items in said store (95, 111) on the basis of each of said plurality of transaction data;
confirmation means for confirming to said at least one initiation site (101) that said changed information items are stored in said store (95, 111);
check means for checking that said transmission means, said stacking means, said transferring means, said changing means, and said confirmation means have operated correctly; and
restoration means for restoring said changed information items to unchanged information items in said store unless said check means indicates correct operation of said transmission means, said stacking means, said transferring means, said changing means, and said confirmation means.

## Patentansprüche

1. Verfahren zur On-line-Verarbeitung von Transaktionsdaten, mit den folgenden Schritten:
a) Übertragen mehrerer Transaktionsdaten von mindestens einem Transaktionsauslöseort (101) an einen Transaktionsverarbeitungsort (110);
b) Stapeln einer Anzahl der übertragenen Transaktionsdaten am Transaktionsverarbeitungsort (110), bis vorbestimmte Bedingungen für das Stapeln hinsichtlich der gestapelten Transaktionsdaten vorliegen, wobei die vorbestimmten Bedingungen dergestalt sind, daß sie es anzeigen, wenn eine Vorbedingung hinsichtlich einer Entscheidung zum Beenden des Stapelvorgangs erfüllt ist;
c) Übertragen aller gestapelter Transaktionsdaten an eine Verarbeitungseinrichtung (305 bis 309) am Transaktionsverarbeitungsort (110), um eine Verarbeitung auszuführen, wenn die vorbestimmten Bedingungen vorliegen; und
d) Verarbeiten der übertragenen Transaktionsdaten unter Verwendung der Verarbeitungseinrichtung (305 bis 309);
**dadurch gekennzeichnet**, daß
- zu den mehreren Transaktionsdaten eine Anzahl verschiedener Typen von Transaktionsdaten gehört und die vorbestimmten Bedingungen das Eintreffen von Transaktionsdaten eines speziellen der Typen am Transaktionsverarbeitungsort betreffen;
- und daß der Schritt (c) ausgeführt wird, wenn die Transaktionsdaten vom speziellen Typ der Typen am Transaktionsverarbeitungsort ankommen, um die vorbestimmten Bedingungen zu erfüllen; die diesen Typ von Transaktionsdaten betreffen.

2. Verfahren zur On-line-Verarbeitung von Transaktionsdaten nach Anspruch 1, bei dem die Verarbeitung der übertragenen Transaktionsdaten durch die Verarbeitungseinrichtung (305 bis 309) folgendes umfaßt:
e) Ändern mehrerer abgespeicherter, in einem Speicher (95, 111) abgespeicherter Einzelinformationen in geänderte Einzelinformationen innerhalb des Speichers (95, 111) auf Grundlage jedes der Anzahl von Transaktionsdatenwerten; und
f) Bestätigen an den mindestens einen Auslöseort (101), daß im Speicher (95, 111) die geänderten Einzelinformationen abgespeichert wurden; und
g) Überprüfen, ob jeder der Schritte (a) bis (c), (e) und
(f) korrekt ausgeführt wurde, und Wiederherstellen der Einzelinformationen in ihren Zustand vor den Schritten (a) bis (c), (e) und (f), wenn nicht alle Schritte (a) bis (c), (e) und (f) korrekt ausgeführt wurden.

3. Verfahren nach Anspruch 2, bei dem vor dem Schritt (e) jede der Anzahl abgespeicherter Einzelinformationen in ein erstes Register (115) eingespeichert wird, wobei jede der Anzahl abgespeicherter Einzelinformationen im Schritt (g) von diesem Register (115) an den Speicher (111) zurückgegeben wird, wenn nicht alle Schritte (a) bis (c), (e) und (f) korrekt ausgeführt wurden.

4. Verfahren nach Anspruch 2 oder Anspruch 3, bei dem der Schritt (e) das Einspeichern jeder der geänderten Einzelinformationen in ein zweites Register (116) zusätzlich zum Einspeichern in den Speicher (111) beinhaltet, wodurch jede der Anzahl von Einzelinformationen im Schritt (g) auf Grundlage der geänderten Einzelinformationen und der gestapelten Transaktionsdaten wiederherstellbar ist.

5. On-line-Verarbeitungssystem für Transaktionsdaten, mit:
- mindestens einem Transaktionsauslöseort (101) zum Erzeugen mehrerer Transaktionsdaten;
- einem Transaktionsverarbeitungsort (110) zum Verarbeiten der mehreren Transaktionsdaten, der eine Verarbeitungseinrichtung (305 bis 309) zum Verarbeiten der Transaktionsdaten aufweist; und
- einer Übertragungseinrichtung zum Übertragen der Transaktionsdaten vom Transaktionsauslöseort (101) an den Transaktionsverarbeitungsort (110);
- wobei der Transaktionsverarbeitungsort (110) ferner folgendes aufweist:
-- eine Definiereinrichtung (401 bis 406, 501 bis 504) zum Definieren vorbestimmter Bedingungen;
-- eine Stapeleinrichtung (102) zum Stapeln einer Anzahl übertragener Transaktionsdaten am Transaktionsverarbeitungsort (110), bis die vorbestimmten Bedingungen für die gestapelten Transaktionsdaten vorliegen, wobei die vorbestimmten Bedingungen solche für das Stapeln sind, und sie dergestalt sind, daß sie es anzeigen, wenn eine Vorbedingung zum Entscheiden des Beendens des Stapelvorgangs erfüllt ist; und
-- eine Übertragungseinrichtung (405, 504) zum Übertragen aller gestapelter Transaktionsdaten an die Verarbeitungseinrichtung (305 bis 309) für die Verarbeitung, wenn die vorbestimmten Bedingungen vorliegen;
**dadurch gekennzeichnet**, daß
- die mehreren Transaktionsdaten eine Anzahl verschiedener Typen von Transaktionsdaten umfassen und die vorbestimmten Bedingungen das Eintreffen von Transaktionsdaten eines speziellen Typs unter diesen Typen am Transaktionsverarbeitungsort betreffen; und
- die Übertragungseinrichtung so ausgebildet ist, daß sie die gestapelten Daten überträgt, wenn Transaktionsdaten vom vorbestimmten Typ unter den Typen am Transaktionsverarbeitungsort eintreffen, um die vorbestimmten Bedingungen zu erfüllen, die diesen Typ von Transaktionsdaten betreffen.

6. On-line-Verarbeitungssystem für Transaktionsdaten nach Anspruch 5, bei dem die Transaktionsverarbeitungseinrichtung (305 bis 309) ferner folgendes aufweist:
- einen Speicher (95, 111) zum Einspeichern von Einzelinformationen;
- eine Änderungseinrichtung zum Ändern mehrerer im Speicher (95, 111) abgespeicherter Einzelinformationen in geänderte Einzelinformationen im Speicher (95, 111) auf Grundlage jedes der Anzahl von Transaktionsdatenwerten;
- eine Bestätigungseinrichtung zum Bestätigen an den mindestens einen Auslöseort (101), daß die geänderten Einzelinformationen in den Speicher (95, 111) eingespeichert wurden;
- eine Überprüfungseinrichtung zum Überprüfen, ob die Übertragungseinrichtung, die Stapeleinrichtung, die Übertragungseinrichtung, die Änderungseinrichtung und die Bestätigungseinrichtung korrekt betrieben wurden; und
- eine Wiederherstelleinrichtung zum Wiederherstellen der geänderten Einzelinformationen in unveränderte Einzelinformationen im Speicher, wenn die Überprüfungseinrichtung nicht korrekten Betrieb der Übertragungseinrichtung, der Stapeleinrichtung, der Übertragungseinrichtung, der Änderungseinrichtung und der Bestätigungseinrichtung anzeigt.

## Revendications

1. Procédé de traitement en ligne de données transactionnelles comprenant les étapes de :
a) transmettre une multiplicité de données transactionnelles à partir d'au moins un site de lancement de transaction (101) à un site de traitement de transaction (110);
b) archiver un certain nombre des données transactionnelles transmises audit site de traitement de transaction (110) jusqu'à ce que des conditions prédéterminées pour ledit archivage existent pour lesdites données transactionnelles archivées, les conditions prédéterminées étant telles pour indiquer le moment où une condition prérequise a été satisfaite pour décider de terminer la procédure d'archivage;
c) transférer toutes lesdites données transactionnelles archivées à des moyens de traitement (305 à 309) audit site de traitement de transaction (110) pour traitement lorsque lesdites conditions prédéterminées existent; et
d) traiter lesdites données transactionnelles transférées par utilisation desdits moyens de traitement (305 à 309);
**caractérisé en ce que** :
ladite multiplicité de données transactionnelles comprend un certain nombre de types différents de données transactionnelles et lesdites conditions prédéterminées concernent l'arrivée de données transactionnelles de l'un spécifié desdits types auxdits sites de traitement de transaction,
et en ce que l'étape (c) se produit lorsque lesdites données transactionnelles de l'un spécifié desdits types arrivent audit site de traitement de transaction de façon à satisfaire lesdites conditions prédéterminées se rapportant à ce type de données transactionnelles.

2. Procédé de traitement en ligne de données transactionnelles selon la revendication 1, dans lequel le traitement des données transactionnelles transférées précitées par le moyen de traitement précité (305 à 309) comprend;
e) changer un certain nombre de parties d'informations mémorisées mémorisées dans une mémoire (95, 111) pour changer des parties d'informations dans ladite mémoire (95, 111) sur la base de chacune de la pluralité de données transactionnelles; et
f) confirmer au moins au site de lancement précité (101) que lesdites parties d'informations changées sont mémorisées dans la mémoire (95, 111); et
g) vérifier que chacune des étapes (a) à (c), (e) et (f) ont été accomplies correctement et restituer lesdites parties d'informations mémorisées à leurs états avant les étapes (a) à (c), (e) et (f) à moins que toutes lesdites étapes (a) à (c), (e) et (f) aient été correctement accomplies.

3. Procédé selon la revendication 2, dans lequel avant l'étape (e) chacune de la pluralité précitée des parties d'informations mémorisées est mémorisée dans un premier registre (115) de la sorte chacune de la pluralité des parties d'informations mémorisées est amenée dudit registre (115) à la mémoire précitée (111) à l'étape précitée (g) à moins que toutes les étapes (a) à (c), (e) et (f) soient correctement accomplies.

4. Procédé selon la revendication 2 ou la revendication 3, dans lequel l'étape précitée (e) comprend mémoriser chacune des parties d'informations changées précitées dans un second registre (116) en plus de la mémoire précitée (111), de la sorte chacune de la pluralité des parties d'informations mémorisées est remise à l'état initial à l'étape précitée (g) et sur la base desdites parties d'informations changées et des données transactionnelles archivées.

5. Système de traitement en ligne pour des données transactionnelles, comprenant :
au moins un site de lancement de transaction (101) pour produire une multiplicité de données transactionnelles;
un site de traitement de transaction (110) pour traiter ladite multiplicité des données transactionnelles, le site de traitement de transaction (110) comprenant des moyens de traitement (305 à 309) pour traiter lesdites données transactionnelles; et
un moyen de transmission pour transmettre lesdites données transactionnelles du site de lancement de transaction (101) audit site de traitement de transaction (110); où :
ledit site de traitement de transaction (110) comprend de plus :
des moyens de définition (401 à 406, 501 à 504) définissant des conditions prédéterminées;
un moyen d'archivage (102) pour archiver un certain nombre de données transactionnelles transmises audit site de traitement de transaction (110) jusqu'à ce que lesdites conditions prédéterminées existent pour lesdites données transactionnelles archivées, les conditions prédéterminées étant des conditions prédéterminées pour ledit archivage et étant telles pour indiquer le moment où une condition prérequise a été satisfaite pour décider de terminer la procédure d'archivage; et
des moyens de transfert (405, 504) pour transférer toutes lesdites données transactionnelles archivées auxdits moyens de traitement (305 à 309) pour traitement lorsque les conditions prédéterminées existent;
caractérisé en ce que :
ladite multiplicité de données transactionnelles comprend un certain nombre de types différents de données transactionnelles et lesdites conditions prédéterminées concernent l'arrivée de données transactionnelles de l'un spécifié desdits types audit site de traitement de transaction et en ce que
ledit moyen de transfert est agencé pour transférer lesdites données archivées lorsque lesdites données transactionnelles dudit un spécifié desdits types arrivent audit site de traitement de transaction de façon à satisfaire lesdites conditions prédéterminées se rapportant à ce type de données transactionnelles.

6. Système de traitement en ligne pour données transactionnelles selon la revendication 5, dans lequel le moyen de traitement de transaction (305 à 309) comprend de plus :
une mémoire (95, 111) pour mémoriser des parties d'informations;
un moyen de changement pour changer un certain nombre de parties d'informations mémorisées dans ladite mémoire (95, 111) pour changer des parties d'informations dans ladite mémoire (95, 111) et sur la base de chacune de ladite pluralité de données transactionnelles;
un moyen de confirmation pour confirmer audit au moins un site de lancement (101) que les parties d'informations changées sont mémorisées dans ladite mémoire (95, 111);
un moyen de vérification pour vérifier que ledit moyen de transmission, le moyen d'archivage, ledit moyen de transfert, ledit moyen de changement et ledit moyen de confirmation ont fonctionné correctement; et
un moyen de remise à l'état initial pour remettre à l'état initial lesdites parties d'informations changées en partie d'informations non changées dans ladite mémoire à moins que ledit moyen de vérification indique un fonctionnement correct dudit moyen de transmission, dudit moyen d'archivage, dudit moyen de transfert, dudit moyen de changement et dudit moyen de confirmation.
